# EUROPEAN PATENT SPECIFICATION

(11) **EP 2 163 498 B1**
(45) Date of publication and mention of the grant of the patent: **06.04.2011**
(21) Application number: 08425599.1
(22) Date of filing: 11.09.2008
(51) Int. Cl.: B65G 47/90

(54) **A device for moving and positioning products and a machine equipped with the device**
Vorrichtung zum Verschieben und Positionieren von Produkten und Maschine mit der Vorrichtung
Dispositif pour le déplacement et la mise en place de produits et machine équipée dudit dispositif

(43) Date of publication of application: 17.03.2010
(73) Proprietor: Motor Power Company S.r.l., 42024 Castelnovo di Sotto (RE) (IT)
(72) Inventor: Mignano, Paolo, 42015 Correggio (Reggio Emilia) (IT)
(74) Representative: Gotra, Stefano

(56) References cited:
- EP-A- 0 217 757
- EP-A- 0 498 181
- FR-A- 2 676 955

## Description

### Description.

The invention relates to a device for moving and positioning products in product supply lines.

In particular, the present invention relates to the field of separation and conveying various products on lines, including bottles, vials, cans, bricks and other single containers usable in the food field, the packaging field and the bottling field of food, chemical and pharmaceutical products.

Alternatively, these devices can also be used for grouping and ordering products, arranging them in a different orientation from the one they are in on reaching the conveyor line.

In addition the present invention can be applied for sorting luggage on a supply line to one or more destinations.

As is known, these devices are especially used upstream of control systems, selection systems and packaging systems.

The products to be sorted, moved and/or positioned advance on a conveyor belt or support belt, in succession on a single line, up to a work area which precedes the packing or sorting zone.

This area thus precedes a plurality of outlet conduits and at least an unloading station, in a case of a line for sorting products, or, alternatively, precedes a single outlet line at which the products, specially positioned, are, for example, deposited on pallets or are packed.

To perform the above functions, two main solutions are at present usually adopted, internally of the work zone.

The first includes the presence of an anthropomorphic robot equipped with a special pliers at its wrist. The second consists of a like pliers, moved via a system of Cartesian axes.

In both cases the pliers are realised with both pneumatic and electrical actuating systems. The electric motors are d.c. and include types both with brushes and brushless. The main movements of the pliers are opening, closing, rotating, vertical translating of the pliers themselves, although the last of the mentioned movements is used less frequently. Typically all the actuators which coordinate the movements of the pliers are applied to the structure thereof, with the result that the total mass of the gripping group considerably increases due to the presence of the actuators, reducers, cables, tubes and cable-bearing chains.

Thus a device of this type is very complex from the structural, constructional and applicational point of view.

Further, present solutions have two main limitations: production, in terms of products per time unit, and the rotational and/or movement quality of the products.

The "production" rate of machines for positioning and/or sorting is around sixty products a minute, the limitation being given by the weight of the pliers group which is added to the weight of the product (mass of abut 80Kg). In order to increase the production, anthropomorphic robots would be necessary, and very expensive and large Cartesian systems too.

Further, the quality of the rotation or the displacement of the products is limited by the performance of the pliers, as the load, in terms of inertia momentum, is very high and the pliers are not always able to perform rotations in the established time.

One also always has to consider that the product runs on a conveyor belt and is rotated-translated directly on the belt, thus beyond the mass of the product and the pliers group, it is necessary to overcome the sliding friction, with a further hindrance too - the products are wrapped in a heat-retractable plastic material (plastic packaging film) which is often still close to working temperature, and in these conditions the product on coming into contact with the conveyor belt, generates a further adherent effect which adds to overall load weight.

A further critical element for the quality of the movement, both during rotation and in translation, is the pliers gripping mechanism, which normally grips the products non-uniformly, with the risk of damaging the pack or even the product itself.

FR 2 676 955 discloses a device for moving and positioning products with two gripping plates connected to guide elements which slide on a single support element.

The aim of the present invention is to overcome the drawbacks encountered in the solutions used in the prior art.

The main aim of the present invention is to provide a product movement and positioning device for supply lines, which can overcome the present production limitations and which uses an improved product gripping and rotating-translating method.

A further aim of the present invention is to realise a product movement and positioning device which can rotate-translate the products while automatically adapting to the dimensions thereof, even in the presence of hindering factors such as the friction of plastic film still near working temperature.

Finally, an aim of the present invention is to provide a product movement and positioning device for supply lines which is lighter, so that even if controlled by the usual known linear actuators the reduction of load affords a proportionally better movement.

These aims and more besides, as will better emerge from the present description, are substantially attained by a product movement and positioning device for supply lines having the characteristics expressed in claim 1 and/or in one or more of the claims dependent thereon.

A description of a non-exclusive preferred embodiment will now be described by way of non-limiting example, of the product movement and positioning device of the invention, illustrated in the accompanying figures of the drawings, in which:
figure 1 is a perspective view of a product movement and positioning device of the present invention, in a first configuration and in a first operating position;
figure 2 is a perspective view of a product movement and positioning device of the present invention, in a first configuration and in a second operating position;
figure 3 is a perspective view of a product movement and positioning device of the invention, in a first configuration and in a third operating position;
figure 4 is a perspective view of a product movement and positioning device of the invention, in a second configuration and in a first operating position of product alignment;
figure 5 is a perspective view of a product movement and positioning device of the present invention, in a second configuration and in an operating position of product rejection;

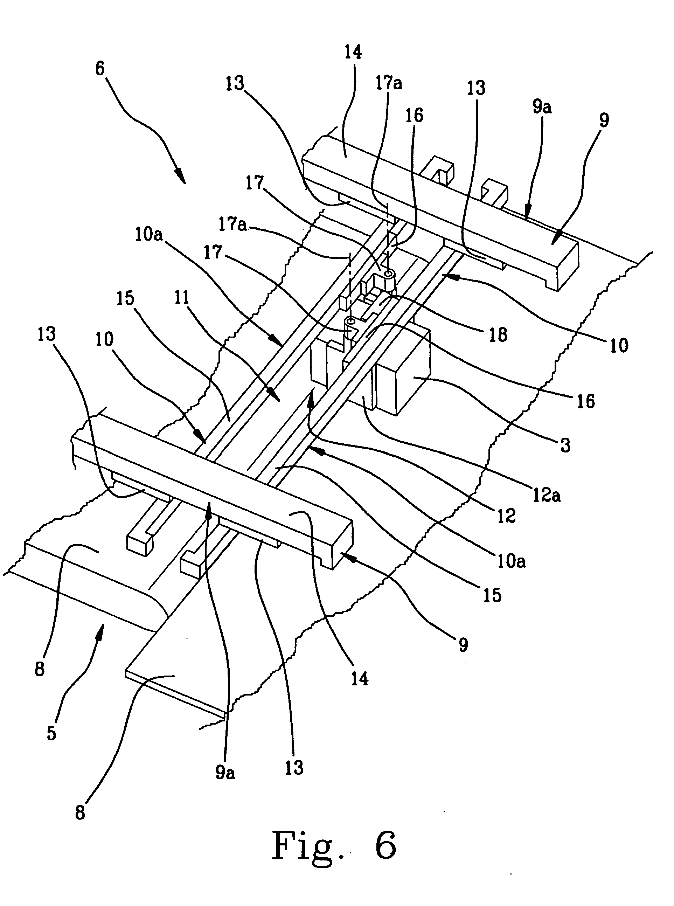

figure 6 is an enlargement of the device of the present invention.

With reference to the figures, 1 denotes a portion of a machine for sorting and/or aligning products 3.

The machine 1 comprises a supply line 2 of products 3 advancing in succession and in a single line, and at least an outlet station 4, for sorting and/or positioning the products 3.

A working area 5 exists between the product supply line 2 and the outlet station 4, which working area 5 comprises a product movement and positioning device 6.

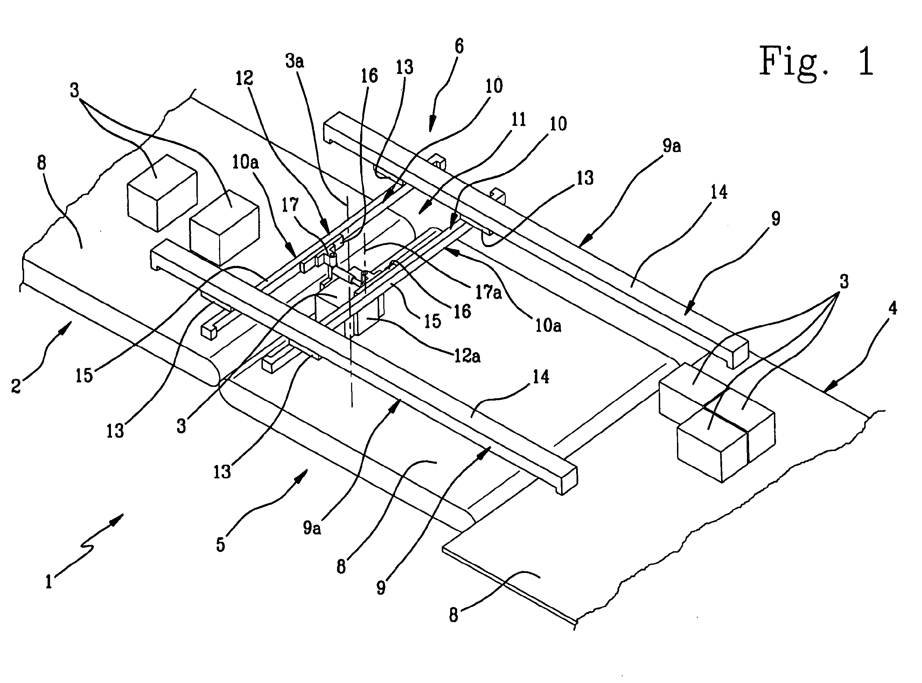

In the configuration illustrated in figures 1 to 3, the device 6 of the present invention is used as a product positioning device. There is in fact only one outlet station 4 or line-end bay set up, for example, for product packing.

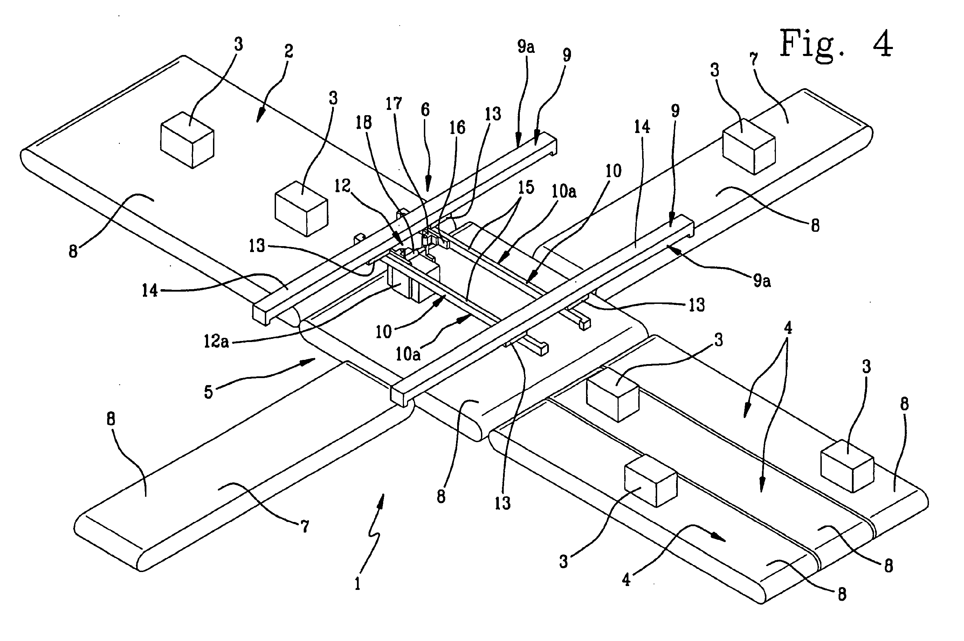

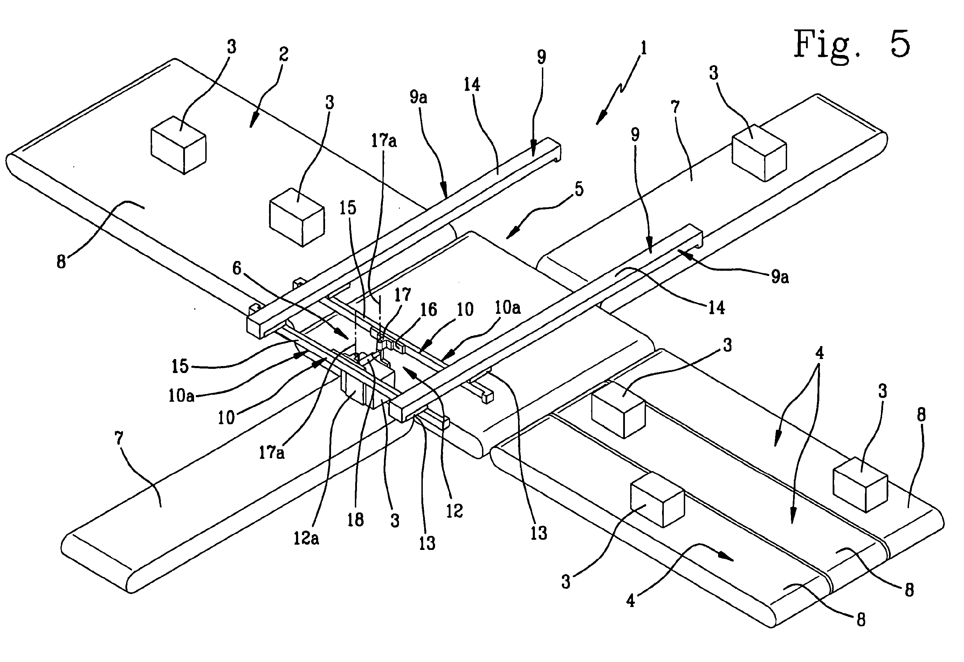

In the configuration illustrated in figures 4 and 5, the device 6 is used as a product sorter 3: the outlet lines 4 are more than one and there is, furthermore, at least a reject station 7 for any defective products, represented in the accompanying figures of the drawings in a lateral position with respect to the working area 5.

The supply line 2, the outlet lines 4 and the zone underlying the working area 5 are provided with a product rest and advancement plane 8, which can be a conveyor belt moving the products or a mat formed by rollers which, by rotating, advance the products 3.

The product movement and positioning device 6 comprises at least two main support elements 9 and at least two guide and movement elements 10, defining a guide channel 11 having a straight axis 10a.

The main support elements 9 comprise at least two straight bars 14, parallel to one another; likewise the guide and movement elements 10 comprise at least two straight bars 15, parallel to one another and arranged transversally with respect to the main support elements 9, to which they are slidably connected.

Further, the device 6 comprises at least a gripping unit 12, comprising two plates 12a which are parallel and face one another. Each plate 12a is connected to a respective bar 15 of the guide and movement elements 10.

The plates 12a are connected to one another via a telescopic connecting element 18. The telescopic connecting element 18 is, preferably, a telescopic bar rigidly connected at each end to a plate 12a. In this way the parallel relation between the two plates 12a is ensured, independently of the movement of the guide and movement elements 9, as will be clarified herein below.

The main support elements 9 advantageously comprise main linear electric motors 9a. In a preferred embodiment, these comprise a plurality of permanent magnets, aligned along a longitudinal development of each straight bar 14 of the support elements 9.

The main electric motors 9a further comprise at least a cursor 13, preferably two, slidable on the straight bar 14 or tract of permanent magnets.

A coil is located internally of each cursor 13, which coil is mobile with the cursor 13 and interacts with the permanent magnets on the respective main support element 9.

The functioning of a linear motor is based on the interaction between the induced magnetic field created by the current which circulates internally of the windings of the coil and the magnetic field generated by the permanent magnets. Following the interaction of attraction and repulsion between the two magnetic fields, the coils in the cursors run along the track of permanent magnets.

Preferably the guide and movement elements 10 also comprise linear electric motors 10a. Thus, the linear electric motors 10a too comprise a plurality of permanent magnets, aligned along the longitudinal development of each guide and movement element 10 and defining a straight tract, coinciding with the bar 15.

Further, at least a cursor 16 runs along each track 15.

A coil is located internally of each cursor 16, which coil is mobile with the cursor 16 and interacts with the permanent magnets on each guide and movement element 10.

The linear electric motors 9a are transversally arranged with respect to the secondary linear electric motors 10a.

Each guide and movement element 9, and in particular each track 15 of permanent magnets, is connected to at least a cursor 13 of each main linear electric motor 9a. In this way, following the interaction and sliding of the cursors 13 along the tracks 14 of permanent magnets of the main linear motors 9a, each guide and movement element 10 is able to slide relatively to the support elements 9, in a transversal direction with respect to the development with respect to the support elements 9 themselves.

This sliding also causes a relative distancing and nearing between the two guide and movement elements 10.

As previously mentioned, the guide and movement elements 10 are also linear electric motors 9a, and each comprises at least a cursor 16 which runs on the track of permanent magnets 15.

Each gripping plate 12a is associated to a respective cursor 16, interacting with and slidable on the respective tract of permanent magnets 15. Each plate 12a is connected to the relative cursor 16 by means of a rotating joint 17.

In this way each plate 12a can rotate about an axis 17a passing through the respective joint 17 and being positioned perpendicular to both the main support elements 9 and the guide and movement elements 10 or, in other words, with respect to the product 3 rest and advancement plane 8. In use, the movement device 6 can easily be used as a sorter of products 3 to be channelled into the outlet conduits 4 located downstream of the working area 5 or along the unloading lines 7 or, alternatively, as a product 3 positioner.

In the first case, as illustrated in figures 4 and 5, the main support elements 9 are transversally positioned with respect to the advancement direction S of the products 3 along the supply line 2. The guide and movement elements 10 are positioned in the same advancement direction S as the products along the supply line 2.

The guide and movement elements 10 are connected to the cursors 13 which translate along the tract 14 of the main electric motor, or, in other words, along the main support elements 9.

In this way, the main support elements 9 act as tracks for the guide and movement elements 10 which thus translate (parallel to one another) staying parallel to the product flow advancement direction S, displacing the products in the desired way and channelling them towards the selected outlet conduit (figure 4).

The guide and movement elements 10 reciprocally slide in nearing and distancing directions: when the product 3 arrives from the supply line 2, the bars 15 of the guide and movement elements 10 distance from one another in order to enable the plates 12a to distance and receive the product 3.

The plates 12a then lock down about the surfaces of the product 3 parallel to the advancement direction S.

At this point the bars 15 near, following the sliding of the cursors 16 along the track 15 of the magnets, blocking the product and exerting a uniform pressure over the whole lateral surface of the product.

The guide and movement elements 10 translate along the support elements 9 in order to correctly position each product in alignment with the relative selected outlet conduit 4.

Finally, a new sliding of the cursors 16 along the track 15 of magnets of the guide and movement elements 10 causes distancing of the plates 12a and thus release of the products 3, which thus advances along the outlet station, also by effect of the support and advancement plane 8 located below the working area 5.

In this configuration, the cursors 16 of the electric motor 10a of the guide and movement elements 10 translate in a same direction.

In a case in which a product is to be rejected, the cursors 16 of the secondary linear electric motor 10a translated up to bringing the plates 12a, and thus the product 3, to a lateral rejection station 7 (figure 5).

In a case in which the machines are destined exclusively for sorting, there being no positioning functions to carry out, the machine can be simplified by adapting the pair of support elements 9 and a sole guide and movement element 10 equipped with a gripping unit 12 constituted exclusively by a single plate 12a.

In this configuration, as the gripping of the product 3 is not necessary, the single plate 12a, having reached in proximity of the product 3 in the above-described ways, will push the product 3 towards the desired station, i.e. towards the reject station 7.

In the alternative configuration, illustrated in figures 1-3, the movement device 6 is oriented such that the bars 14 of the support elements 9 are parallel to the advancement direction of the flow S of the products 3, while the bars 15 of the guide and movement elements 10 are transversal to the advancement direction.

The plates 12a, consequently, are transversal to the product 3 advancement direction S.

When the products arrive in direction S, the bars 15 of the guide and movement elements 10 reciprocally distance, following the sliding, in an opposite direction, of the cursors 13 along the respective tracks 14 of permanent magnets of each main support element 10.

Then the cursors 16 of the secondary electric motors 10a translate in a same direction in order to bring the plates 12a around the product 3 to be positioned, in order to block the surfaces of the products which are transversal to the advancement direction S (figure 1).

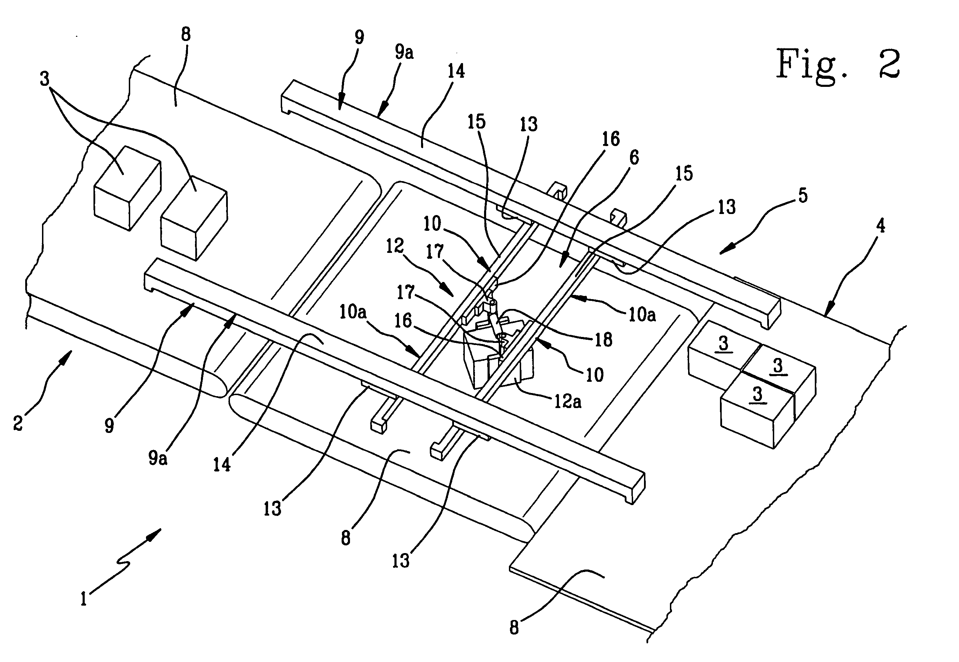

At this point, the cursors 16 of the secondary electric motors 10a slide in opposite directions, thus causing rotation of the plates about the axis 17a of the joint, and thus the rotation of the product about an axis 3a which is perpendicular to the advancement plane (figure 2). During this movement, the plates 12a stay parallel to one another.

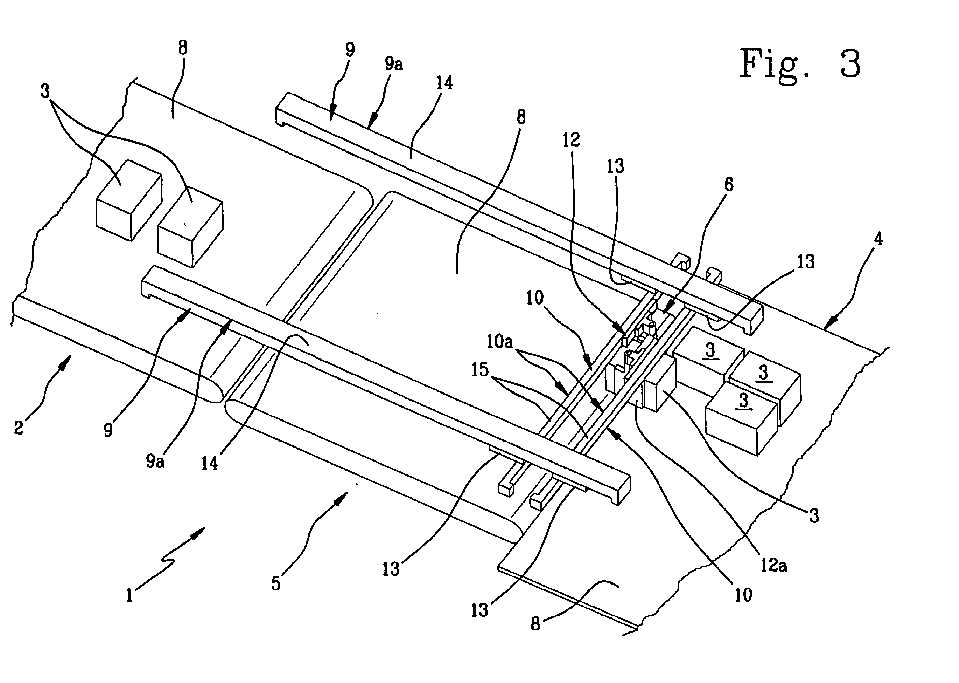

At the same time, the guide and movement elements 10 reciprocally near in order to prevent the plates 12a from losing contact with the product 3 (figure 3).

Finally, once the product has been rotated by the desired angle, greater than 90°, the bars 15 of the guide and movement elements 10 distance in order to release the product.

At the same time, once the product has been rotated, before the plates 12a release it, the cursors 16 can slide equally along the tracks of magnets 16 of the secondary electric motor 10a, in order correctly to position the product 3 on the rest and advancement plane 8.

The invention provides important advantages.

A movement and positioning device of the products for supply lines according to the present invention provides a considerable structural and applicational simplification of the whole device.

Further, it enables a considerable reduction in size and simplifies the overall design of the machine.

Further, a product format change is automatically done, for correct gripping thereof, as the distance between the plates is adaptable to the size of the product to be displaced or positioned.

The smaller sizes enable a greater production per time unit; further, the plates improve the quality of product manipulation, without the products being in any way damaged.

A device such as the one described enables several devices to be positioned in a cascade organisation.

Finally the plates of the gripping group can be telescopic, such as to raise or lower, in order to grip the products or avoid them during the repositioning operation.

The application of the linear motor eliminates the kinematic chains and means, as it uses only a bar and a cursor as moving mechanical organs, thus obtaining important advantages such as an increase in system performance, an increase in production and an energy saving and a reduction in noise.

With respect to the movement and positioning devices in the prior art and currently in use, given a same power capacity the present device provides better performance and therefore a greater useful power which can be exploited for moving heavier products.

Further, the linear motor satisfies the double aim of controlled movement and self-bearing main mechanical structure, thus considerably simplifying the whole device, which is very compact, such as to be managed as if it were a single component.

## Claims

1. A device for moving and positioning products for supply lines, **characterised in that** it comprises:
at least two main support elements (9);
at least two guide and movement elements (10) slidably connected to the main support elements (9);
at least a gripping unit (12) comprising two plates (12a) facing one another, each of which plates (12a) is connected to a respective guide and movement element (10),
a telescopic connecting element (18) which connects the gripping plates (12a) together.

2. The device of claim 1, **characterised in that** the main support elements (9) are main electric linear motors (9a) and the guide and movement elements (10) are secondary linear electric motors (10a).

3. The device of claim 2, **characterised in that** the main electric linear motors (9a) are arranged transversally with respect to the secondary electric linear motors (10a).

4. The device of claim 2 or 3, **characterised in that** both the principal and secondary linear electric motors (9a, 10a) each comprise a plurality of permanent magnets which define respective sliding tracks (14, 15) for at least a respective cursor (13, 16) interacting with the permanent magnets of each track; each cursor (13, 16) comprising a coil.

5. The device of claim 4, **characterised in that** each guide and movement element (10) is connected to at least a cursor (13) of each main electric linear motor (10a), in order to slide relatively to the main support elements (9) and either distancingly or nearingly with respect to the other guide and movement element (10).

6. The device of one of the preceding claims, **characterised in that** the telescopic connecting element (18) is solidly connected to the gripping plates (12a), in order to keep the plates (12a) constantly parallel to one another.

7. The device of one of claims from 4 to 6, **characterised in that** each gripping plate (12a) is associated to a respective cursor (16), comprising a coil, which cursor (16) interacts with and is slidable on a respective track (15) of permanent magnets of a respective guide and movement element (10).

8. The device of claim 7, **characterised in that** each gripping plate (12a) is connected to the respective cursor (16) by a rotating joint (17).

9. The device of claim 7 or 8, **characterised in that** the cursors (16) associated to each guide and movement element (10) are slidable along the respective secondary linear electric motor (10a) in a same direction, in order to translate a product (3) blocked between the plates (12a) along the channel defined by the guide and movement elements (10).

10. The device of claim 7 or 8, **characterised in that** the cursors (16) associated to each guide and movement element (10) are slidable along the respective secondary electric linear motor (10a) in a different direction, in order to rotate the product (3) blocked between the gripping plates (12a) about an axis (3a) which is transversal to the main support elements (9) and to the guide and movement elements (10).

11. A machine for sorting and/or aligning products, comprising at least a supply line (2) of the products (3) and at least an outlet conduit (4) of the products, **characterised in that** it comprises a movement and positioning device (6) according to claims from 1 to 10, located between the supply line (2) and the outlet conduit (4).

## Patentansprüche

1. Vorrichtung zum Verschieben und Positionieren von Produkten für Zuleitungen, **dadurch gekennzeichnet, dass** sie umfasst:
mindestens zwei Haupthalterungselemente (9);
mindestens zwei Führungs- und Verschiebungselemente (10), die verschiebbar mit den Haupthalterungselementen (9) verbunden sind;
mindestens eine Festspanneinheit (12), umfassend zwei einander gegenüberliegende Platten (12a), wobei jede dieser Platten (12a) mit einem entsprechenden Führungs- und Verschiebungselement (10) verbunden ist, ein teleskopisches Verbindungselement (18), das die Festspannplatten (12a) miteinander verbindet.

2. Vorrichtung nach Anspruch 1, **dadurch gekennzeichnet, dass** die Haupthalterungselemente (9) elektrische Hauptlinearmotoren (9a) sind und dass die Führungs- und Verschiebungselemente (10) elektrische Hilfslinearmotoren (10a) sind.

3. Vorrichtung nach Anspruch 2, **dadurch gekennzeichnet, dass** die elektrischen Hauptlinearmotoren (9a) quer zu den elektrischen Hilfslinearmotoren (10a) angeordnet sind.

4. Vorrichtung nach Anspruch 2 oder 3, **dadurch gekennzeichnet, dass** sowohl die elektrischen Haupt- als auch die elektrischen Hilfslinearmotoren (9a, 10a) jeweils eine Vielzahl von Permanentmagneten umfassen, die jeweils Gleitbahnen (14, 15) für mindestens einen entsprechenden Läufer (13, 16) definieren, der mit den Permanentmagneten jeder Bahn interagiert, wobei jeder Läufer (13, 16) eine Spule umfasst.

5. Vorrichtung nach Anspruch 4, **dadurch gekennzeichnet, dass** jedes Führungs- und Verschiebungselement (10) mit mindestens einem Läufer (13) jedes elektrischen Hauptlinearmotors (10a) verbunden ist, um zu den Haupthalterungselementen (9) und entweder im Abstand zum oder nahe am anderen Führungs- und Verschiebungselement (10) zu gleiten.

6. Vorrichtung nach einem der vorangehenden Ansprüche, **dadurch gekennzeichnet, dass** das teleskopische Verbindungselement (18) fest mit den Festspannplatten (12a) verbunden ist, um die Platten (12a) konstant parallel zueinander zu halten.

7. Vorrichtung nach einem der Ansprüche 4 bis 6, **dadurch gekennzeichnet, dass** jede Festspannplatte (12a) einem entsprechenden Läufer (16) zugeordnet ist, der eine Spule umfasst, wobei der Läufer (16) mit einer entsprechenden Bahn (15) von Permanentmagneten eines entsprechenden Führungs- und Verschiebungselements (10) interagiert und darauf verschiebbar ist.

8. Vorrichtung nach Anspruch 7, **dadurch gekennzeichnet, dass** jede Festspannplatte (12a) mit dem entsprechenden Läufer (16) durch eine Drehverbindung (17) verbunden ist.

9. Vorrichtung nach Anspruch 7 oder 8, **dadurch gekennzeichnet, dass** die Läufer (16), die jedem Führungs- und Verschiebungselement (10) zugeordnet sind, entlang des jeweiligen elektrischen Hilfslinearmotors (10a) in eine selbe Richtung verschiebbar sind, um ein Produkt (3), das zwischen den Platten (12a) festgespannt ist, entlang des durch die Führungs- und Verschiebungselemente (10) definierten Kanals zu fördern.

10. Vorrichtung nach Anspruch 7 oder 8, **dadurch gekennzeichnet, dass** die Läufer (16), die jedem Führungs- und Verschiebungselement (10) zugeordnet sind, entlang des jeweiligen elektrischen Hilfslinearmotors (10a) in eine andere Richtung verschiebbar sind, um das Produkt (3), das zwischen den Festspannplatten (12a) festgespannt ist, um eine Achse zu drehen, die quer zu den Haupthalterungselementen (9) und den Führungs- und Verschiebungselementen (10) verläuft.

11. Maschine zum Sortieren und/oder Ausrichten von Produkten, umfassend mindestens eine Zuleitung (2) der Produkte (3) und mindestens eine Ableitung (4) der Produkte, **dadurch gekennzeichnet, dass** sie eine Vorrichtung zum Verschieben und Positionieren (6) nach den Ansprüchen 1 bis 10 umfasst, die zwischen der Zuleitung (2) und der Ableitung (4) angeordnet ist.

## Revendications

1. Dispositif pour le déplacement et la mise en place de produits pour des lignes d'alimentation, **caractérisé en ce qu'**il comprend :
au moins deux éléments de support principaux (9) ;
au moins deux éléments de guidage et de mouvement (10) reliés coulissant aux éléments de support principaux (9) ;
au moins une unité de préhension (12) comprenant deux plaques (12a) l'une en face de l'autre, chacune des plaques (12a) est reliée à un élément de guidage et de mouvement respectif (10),
un élément de raccordement télescopique (18) qui rassemble les plaques de préhension (12a).

2. Dispositif selon la revendication 1, **caractérisé en ce que** les éléments de support principaux (9) sont des moteurs électriques linéaires principaux (9a), et les éléments de guidage et de mouvement (10) sont des moteurs électriques linéaires secondaires (10a).

3. Dispositif selon la revendication 2, **caractérisé en ce que** les moteurs électriques linéaires principaux (9a) sont positionnés transversalement par rapport aux moteurs électriques linéaires secondaires (10a).

4. Dispositif selon les revendications 2 ou 3, **caractérisé en ce que** les moteurs électriques linéaires principaux et secondaires (9a, 10a) comprennent chacun une pluralité d'aimants permanents, qui forment des glissières respectives (14, 15) pour au moins un curseur respectif (13, 16) interagissant avec les aimants permanents de chaque glissière ; chaque curseur (13, 16) comprenant une bobine.

5. Dispositif selon la revendication 4, **caractérisé en ce que** chaque élément de guidage et de mouvement (10) est relié à au moins un curseur (13) de chaque moteur électrique linéaire principal (10a), afin de coulisser par rapport aux éléments de support principaux (9), soit s'éloignant soit se rapprochant de l'autre élément de guidage et de mouvement (10).

6. Dispositif selon l'une des revendications précédentes, **caractérisé en ce que** l'élément de raccordement télescopique (18) est solidaire des plaques de préhension (12a), afin de garder les plaques (12a) toujours parallèles l'une à l'autre.

7. Dispositif selon l'une des revendications 4 à 6, **caractérisé en ce que** chaque plaque de préhension (12a) est associée à un curseur respectif (16), comprenant une bobine, dont le curseur (16) interagit avec et est coulissant sur une glissière respective (15) d'aimants permanents d'un élément de guidage et de mouvement respectif (10).

8. Dispositif selon la revendication 7, **caractérisé en ce que** chaque plaque de préhension (12a) est reliée au curseur respectif (16) par un joint tournant (17).

9. Dispositif selon les revendications 7 ou 8, **caractérisé en ce que** les curseurs (16) associés à chaque élément de guidage et de mouvement (10) sont coulissants le long du moteur électrique linéaire secondaire respectif (10a) dans une même direction, afin de déplacer un produit (3) serré entre les plaques (12a) le long d'un canal formé par les éléments de guidage et de mouvement (10).

10. Dispositif selon les revendications 7 ou 8, **caractérisé en ce que** les curseurs (16) associés à chaque élément de guidage et de mouvement (10) sont coulissants le long du moteur électrique linéaire secondaire respectif (10a) dans une autre direction, afin de faire pivoter le produit (3) serré entre les plaques de préhension (12a) sur un axe (3a), qui est transversal par rapport aux éléments de support principaux (9) et aux éléments de guidage et de mouvement (10).

11. Machine pour trier et/ou aligner des produits, comprenant au moins une ligne d'alimentation (2) des produits (3) et au moins un conduit de sortie (4) des produits, **caractérisée en ce qu'**elle comprend un dispositif de déplacement et de mise en place (6) selon les revendications 1 à 10, placé entre la ligne d'alimentation (2) et le conduit de sortie (4).
